# EUROPÄISCHE PATENTSCHRIFT

(11) **EP 1 377 488 B1**
(45) Veröffentlichungstag und Bekanntmachung des Hinweises auf die Patenterteilung: **18.03.2009**
(21) Anmeldenummer: 02750857.1
(22) Anmeldetag: 09.04.2002
(51) Int. Cl.: B61C 5/00, B61C 17/04, B61D 27/00, B60R 13/08

(54) **SCHIENENTRIEBFAHRZEUG MIT EINER ANTRIEBSVORRICHTUNG UND GERÄUSCHDÄMMENDEN MITTELN**
DRIVEN RAIL VEHICLE WITH A DRIVE DEVICE AND NOISE INSULATING MEANS
VEHICULE FERROVIAIRE AUTOMOTEUR COMPRENANT UN MECANISME MOTEUR ET UN SYSTEME D'INSONORISATION

(30) Priorität: 12.04.2001 DE 10118219
(43) Veröffentlichungstag der Anmeldung: 07.01.2004
(73) Patentinhaber: Bombardier Transportation GmbH, 10785 Berlin (DE)
(72) Erfinder: BECKER, Jürgen, 90559 Burgthann (DE)
(74) Vertreter: Cohausz & Florack
(86) Internationale Anmeldenummer: PCT/EP2002/003916
(87) Internationale Veröffentlichungsnummer: WO 2002/090165

(56) Entgegenhaltungen:
- EP-A- 0 625 456
- EP-A- 0 794 098
- DE-A- 2 636 171
- GB-A- 1 499 140

## Beschreibung

Die Erfindung betrifft ein Schienentriebfahrzeug gemäß dem Oberbegriff des ersten Anspruchs.

Ein bekanntes Schienentriebfahrzeug dieser Art (DE G 85 21 737.9 U1) weist einen auf einem Fahrwerk abgestützten Wagenkasten auf, der unterflurig mit einer Antriebseinrichtung aus einem Verbrennungsmotor mit zugeordnetem Getriebe besteht, das Getriebe steht in Antriebsverbindung mit dem Fahrwerk. Die Antriebseinrichtung ist an der Unterseite des Untergestells am Wagenkasten festgesetzt. Die Antriebseinrichtung ist durch nach unten gezogene Schürzen der Wagenkastenseitenwände seitlich abgedeckt und von unten her frei zugänglich. Zur Dämpfung der von der Antriebseinrichtung erzeugten Schwingungen und Geräusche sind in den Wagenkasten im Bereich des Verbrennungsmotors geräuschdämmende Wandungselemente eingebaut, die den benachbarten Fahrgastraum schützen. Aus des GB-A-1 499 140 ist weiterhin ein Fahrzeug mit den Merkmalen des Oberbegriffes des Anspruchs 1 bekannt.

Der Erfindung liegt die Aufgabe zugrunde, bei einem Schienentribfahrzeug gemäß dem Oberbegriff des ersten Anspruchs Maßnahmen zu treffen, durch welche eine Verminderung der Geräuschabstrahlung in die freie Atmosphäre erreicht wird,

Die Lösung dieser Aufgabe erfolgt gemäß der Erfindung durch die kennzeichnenden Merkmale des Anspruchs 1. Weitere vorteilhafte Ausbildungen sind in zusätzlichen Ansprüchen angegeben.

Bei einem Aufbau eines Schienentriebfahrzeugs gemäß der Erfindung wird der die Antriebseinrichtung aufnehmende Maschinenraum geräuschdämmend gekapselt, so daß eine Geräuschabstrahlung in die Umwelt wesentlich vermindert wird. Um dennoch eine sonst durch Konvexion und Fahrtwind erzielte Kühlung der Antriebseinrichtung zu erreichen, ist eine Zwangsbelüftung des Maschinenraumes vorgesehen. Hierzu ist in der Außenwandung der Kapselung jeweils eine Ansaug-und eine Ausblasöffnung vorgesehen, die zur Vermeidung von fahrtrichtungsabhängiger Kühlwirkung quer zur Wagenkastenlängsachse weisen. Darüber hinaus ist der Ansaug- wie der Ausblasöffnung ein geräuschgedämmter Luftführungskanal zugeordnet, so daß im Maschinenraum erzeugte Geräusche auch nicht über die Luftführungskanäle mit unzulässigen Geräuschpegeln nach außen gelangen können. Dabei wirkt die Verkapselung auch einer Verschmutzung der Antriebseinheit und der zugeordneten Steuereinheit entgegen, zudem schützt sie gegen heraufwirbelnde Fremdkörper wie z.B. Gleisbettschotter. Um auch über die Ansaugöffnung nur ein Minimum an Schmutzpartikeln anzusaugen, ist die Ansaugöffnung in einer Seitenwand vorgesehen. Dabei kann die Ansaugöffnung in einer Seitenwand der Verkapselung oder gegebenenfalls auch nach oben in die Seitenwand des Wagenkastens verlagert sein. Die Ansaugöffnung findet sich dann in einem Bereich, in dem vom Boden aufgewirbelte Schmutzpartikel nunmehr in wesentlich verminderter Konzentration auftreten. Die Ausblasöffnung kann dagegen in der Bodenwand der Kapselung angeordnet werden, so daß sie nach unten zum Gleiskörper weist. In Folge des durch die Lüftung erzeugten Überdrucks im Maschinenraum können Schmutzpartikel durch die Ausblasöffnung nicht in die Kapselung eindringen. Zugleich wird vermieden, daß Warmluft unmittelbar in den Bereich geblasen wird, in dem sich Personen, z.B. auf Bahnsteigen befinden können. Dabei sind bei dieser Anordnung die äußeren An- und Abströmverhältnisse an diesen Öffnungen in beiden Fahrtrichtungen gleich, so daß eine fahrtrichtungsunabhängige Lüftung der Antriebseinrichtung und ihrer Hilfsaggregate erzielt wird.

Wenn die Antriebseinrichtung einen Verbrennungsmotor, insbesondere einen Dieselmotor aufweist, ist mit demselben in der Regel ein Elektrogenerator gekuppelt. Solange dabei der Antriebsmotor läuft, dreht auch der Elektrogenerator mit. Dabei ist der Elektrogenerator mit einem Kühllüfter verbunden, der saugseitig mit dem Ansaugkanal kommuniziert und andererseits ausblasseitig die geförderte Kühlluft über den Elektrogenerator zum Antriebsmotor und anderen im Maschinenraum angeordneten Einrichtung fördert. Dadurch ist eine Grundkühlung der Aggregate im Maschinenraum sichergestellt. Um im Bedarfsfall bei erhöhter Wärmeentwicklung die Wärmeabfuhr aus dem Maschinenraum verbessern zu können, ist vorzugsweise an den Ansaugkanal zusätzlich ein Hauptlüfter angeschlossen, der ausblasseitig ebenfalls in den Maschinenraum ausmündet. Dabei können dem Hauptlüfter zur gezielten Zuführung von Kühlluft zu bestimmten Aggregaten der Antriebseinrichtung Luftleiteinrichtungen nachgeordnet sein, die eine gezielte Kühlung von besonderen Wärmequellen bewirken. Dieser Hauptlüfter wird dabei zweckmäßig mittels eines im Maschinenraum angeordneten Temperatur-Schaltelements gesteuerte, das bei Überschreiten eines Grenzwertes der erfaßten Temperatur den Hauptlüfter selbsttätig in Gang setzt.

Der Ausblaskanal zur Abführung der erwärmten Luft aus dem Maschinenraum reicht von seiner im Boden der Kapselung angeordneten Ausblasöffnung nach oben in den oberen Bereich des Maschinenraumes, so daß gezielt aus dem Bereich, in dem sich die höher erwärmte Luft befindet, Wärmeenergie abgeführt wird.

Wenn die Antriebseinrichtung ein Getriebe mit einer hydraulischen Getriebesteuerung aufweist, die erfahrungsgemäß unter bestimmten Bedingungen eine erhöhte Wärmeabfuhr erfordert, dann ist es zweckmäßig, an die Getriebesteuerung einen Nebenluftkanal heranzuführen, der mit Kühlluft gespeist wird. Dabei kann der Nebenluftkanal z.B. vom Generatorlüfter oder vom Hauptlüfter her mit Kühlluft versorgt werden. Vorzugsweise ist jedoch ein eigner Kühllüfter vorgesehen, der Kühlluft über einen weiteren separaten geräuschgedämmten Kanal aus der Außenatmosphäre ansaugt, wobei auch die zugehörige Ansaugöffnung in einer Seitenwand der Kapselung bzw. des Wagenkastens angeordnet sein soll, um ebenfalls eine fahrtrichtungsunabhängige Kühlwirkung bei geringem Schmutzpartikeleintrag zu erzielen. Möglichst weit nach oben gelegte Ansaugöffnungen vermindern zudem die Gefahr, daß sie durch Verunreinigungen wie z.B. Schnee zugesetzt werden.

Die Erfindung ist nachfolgend anhand der Prinzipskizzen eines Ausführungsbeispiels näher erläutert.

Es zeigen:
- Fig. 1: eine Teilansicht eines Schienenfahrzeugs im Bereich einer gekapselten Antriebseinheit und

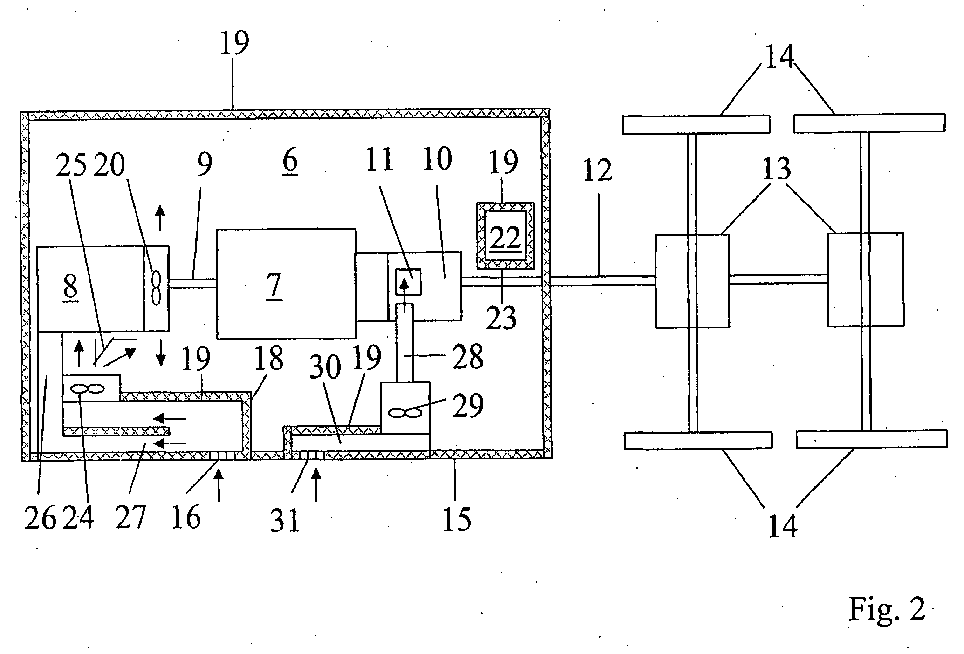

- Fig. 2: eine Draufsicht auf eine gekapselte Antriebseinheit in einer horizontalen Schnittansicht.

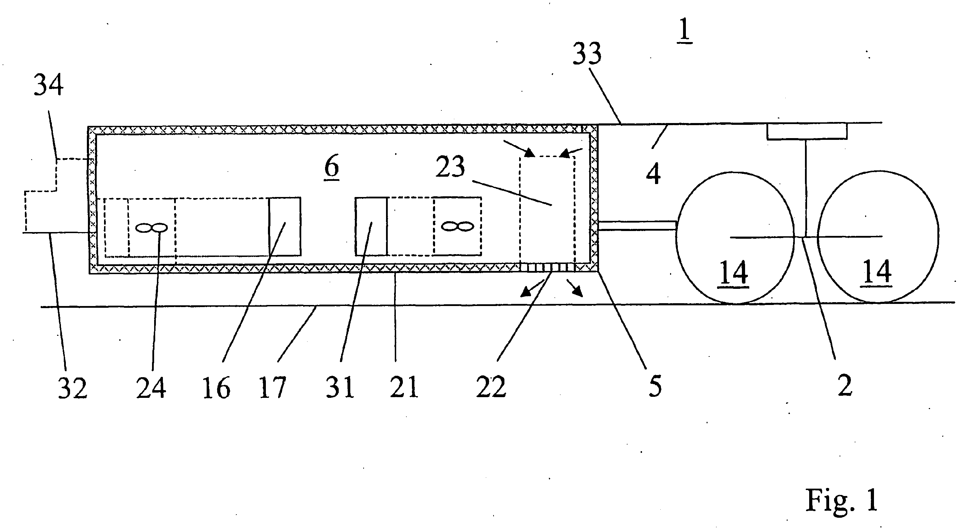

Ein in Figur 1 nur teilweise dargestelltes Schienenfahrzeug weist einen bei 1 angedeuteten Wagenkasten auf, an den der auf einem Drehgestell gelagert ist. Der Wagenkasten 1 weist ein Untergestell 4 auf, an das in unterfluriger Bauweise eine Kapselung 5 angesetzt ist. Die Kapselung 5 ist geräuschdämmend ausgebildet und umschließt einen Maschinenraum 6, in dem eine Antriebseinrichtung untergebracht ist. Die Antriebseinrichtung umfaßt neben sonstigen Hilfs- und Steuereinrichtungen einen Antriebsmotor 7, der vorzugsweise als Verbrennungsmotor und insbesondere als Dieselmotor ausgebildet ist. Mit dem Antriebsmotor 7 ist einerseits ein Elektrogenerator 8 über eine Antriebswelle 9 gekuppelt, während andererseits ein hydraulisches oder mechanisches Getriebe 10 mit einer elektronisches Steuereinrichtung 11 an den Antriebsmotor 7 angeschlossen ist. Das Getriebe 10 steht über eine Antriebswelle 12 mit einem außerhalb der Kapselung 5 angeordneten Achsgetriebe 13 in Antriebsverbindung, wobei über das Achsgetriebe 13 ein Radsatz mit Schienenrädern 14 des Fahrwerks 2 gekuppelt ist.

Die geräuschdämmend aufgebaute Kapselung 5, die den Maschinenraum 6 allseitig schalldämmend umschließt, kann aus metallischen Wandungsteilen aufgebaut sein, die mit schalldämmenden Materialien 19 bekleidet sind. Die Wandungen der Kapselung 5 können jedoch auch aus in sich schalldämmend wirkenden Werkstoffen z.B. aus Kunststoffen bestehen. Um in der zumindest weitgehend schalldichten Verkapselung des Maschinenraumes die notwendige Kühlung der Antriebseinrichtung sicherzustellen, ist in einer zumindest weitgehend senkrecht stehenden Seitenwand 15 der Kapselung 5 eine Ansaugöffnung 16 vorgesehen, deren Flächennormale jedenfalls annähernd senkrecht zur Längsachse des Wagenkastens 1 gerichtet ist und waagerecht d.h. etwa parallel zur der Ebene verläuft, in welcher die Schienen 17 zur Führung der Schienenräder 14 liegen. Von der Ansaugöffnung 16 führt ein Ansaugkanal 18 in den Maschinenraum 6 hinein, wobei der Ansaugkanal 18 parallel zu der die Ansaugöffnung 16 aufnehmende Seitenwand 15 verläuft. Der Ansaugkanal 18 kann selbst auch aus geräuschdämmendem Werkstoff bestehen oder ist mit einer geräuschdämmenden Auskleidung 19 versehen. Der Ansaugkanal 16 führt innerhalb des Maschinenraumes 6 zum Elektrogenerator 8, der endseitig einen Kühllüfter 20 zur eigenen betrieblichen Kühlung aufweist. Der stets mit dem Verbrennungsmotor 7 gekuppelte Elektrogenerator bzw. dessen Lüfter erzeugt somit bei Betrieb der Antriebseinrichtung einen Grundkühlluftstrom der zumindest bei Leerlauf der Antriebseinrichtung eine die Wärmeabfuhr insbesondere des Verbrennungsmotors ausreichende Luftmenge fördert. Zur Abführung der erwärmten Luft ist entfernt von der Einströmstelle, also vom Kühlüfter 20, im Boden 21 der Kapselung 5 eine Ausblasöffnung 22 vorgesehen, von der ein Ausblaskanal 23 nach oben in den oberen Bereich des Maschinenraums 6 führt, in dem sich die am höchsten erwärmte Kühlluft sammelt. Der Ausblaskanal 23 ist dabei wie der Ansaugkanal 18 aus geräuschdämmendem Material hergestellt oder mit einer geräuschdämmenden Auskleidung 19 versehen. Auch die Ausblasöffnung 22 ist dabei quer zur Wagenkastenlängsachse gerichtet und weist auf die durch die Schienen 17 gebildete Ebene hin. Ihre Flächennormale steht somit zumindest weitgehend senkrecht. Durch diese Anordnung der Ausblas- sowie Ansaugöffnungen 22 bzw. 16 quer zur Wagenkastenlängsachse wird sichergestellt, daß die Strömungsverhältnisse während der Fahrt des Schienenfahrzeugs fahrtrichtungsunabhängig sind, so daß die Kühlung der Antriebseinrichtung in beiden Fahrtrichtungen des Schienenfahrzeugs in gleicher Intensität erfolgt.

An den Ansaugkanal 18 ist entfernt von der Ansaugöffnung 16 zusätzlich ein Hauptlüfter 24 angeschlossen, der dann in Betrieb gesetzt wird, wenn ein temperaturunabhängiges Schaltelement im Maschinenraum 6 oder an einem Bauteil der Antriebseinrichtung eine Temperatur ermittelt, die oberhalb einer festgelegten Grenztemperatur liegt. Die vom Hauptlüfter 24 aus dem Ansaugkanal 18 in den Maschienenraum 6 geförderte Kühlluft kann frei in den Maschinenraum 6 ausmünden oder über Teilkanäle oder Luftleitbleche 25 gezielt zu den Komponenten der Antriebseinrichtung hingeführt werden. Dabei ist der an die Saugseite des Kühllüfters 20 angeschlossene Saugkanal- 26 im Ansaugbereich des Hauptlüfters 24 so in den Ansaugkanal 18 eingeführt, daß bei aktiviertem Hauptlüfter 24 die im Ansaugkanal 18 zuströmende Kühlluft auch zur Einlaßöffnung 27 des Saugkanals 26 staufrei hinströmt.

Nachdem die Steuereinheit 11 am Getriebe 10 im erhöhten Maße wärmeempfindlich ist, kann ein zusätzlicher Nebenluftkanal 28 vorgesehen werden, der ausblasseitig unmittelbar auf den Bereich gerichtet ist, in dem sich die Steuerung 11 befindet und der einblasseitg zum Ausblasbereich des Hauptlüfters 24 geführt wird. Vorzugsweise ist der Nebenluftkanal 28 jedoch an den Ausgangsstutzen eines separaten Kühllüfters 29 angeschlossen, dessen Eingangsstutzen an einen weiteren geräuschgedämmten Ansaugkanal 30 angesetzt ist. Dieser zusätzliche Ansaugkanal 30 kann wiederum parallel zur Seitenwand 15 der Kapselung 5 verlaufen und eine eigene Ansaugöffnung 31 ebenfalls in der Seitenwand 15 aufweisen. Dadurch ist auch die Anströmung für zuströmende Kühlluft wie bei der Ansaugöffnung 16 fahrtrichtungsunabhängig.

Die Antriebseinrichtung, die zumindest den Verbrennungsmotor 7, den Elektrogenerator 8 und das Getriebe 10 umfaßt, kann zusammen mit der zugeordneten Kapselung 5 insbesondere am Übergang von einem niederflurigen Abschnitt 32 zu einem hochflurigen Abschnitt 33 des Bodens des Wagenkastens 1 angeordnet werden, wobei zwischen den beiden Abschnitten 32 und 33 eine Treppe 34 vorgesehen sein kann.

Insgesamt ergibt sich somit beim erfindungsgemäßen Aufbau aufgrund der geräuschdämmenden Kapselung und der Geräuschdämmung im Bereich der für die Kühlluftföderung erforderlichen Kanälen und Öffnungen ein sehr niedrige Schallabstrahlung in die freie Atmosphäre. Dabei ist eine betriebsgerechte Kühlung der Komponenten in der Antriebseinheit sichergestellt und die Kühlwirkung auch nicht abhängig von der Fahrtrichtung des so ausgestatteten Schienenfahrzeugs. Zudem wird dadurch die Antriebseinheit gegen äußere Einflüsse abgeschirmt und dennoch eine Überhitzung innerhalb der Kapselung vermieden. Dabei ist der Boden 21 vorzugsweise als Ölauffangwanne ausgebildet, um Lecköl der Antriebseinheit aufzufangen.

### Bezugszeichen-Liste

- 1: Wagenkasten, angedeutet
- 2: Fahrwerk
- 4: Untergestell
- 5: Kapselung
- 6: Maschinenraum
- 7: Antriebsmotor
- 8: Elektrogenerator
- 9: Antriebswelle
- 10: Getriebe
- 11: Steuereinrichtung
- 12: Antriebswelle
- 13: Achsgetriebe
- 14: Schienenräder
- 15: Seitenwand
- 16: Ansaugöffnung
- 17: Schienen
- 18: Ansaugkanal
- 19: Auskleidung; geräuschdämmend
- 20: Kühllüfter
- 21: Boden
- 22: Ausblasöffnung
- 23: Ausblaskanal
- 24: Hauptlüfter 24
- 25: Teilkanäle/Luftleitbleche
- 26: Saugkanal
- 27: Einlaßöffnung
- 28: Nebenluftkanal
- 29: Kühllüfter
- 30: Ansaugkanal
- 31: Ansaugöffnung
- 32: niederflurigen Abschnitt
- 33: hochflurigen Abschnitt
- 34: Treppe

## Patentansprüche

1. Schienentriebfahrzeueg mit einem Wagenkasten und einer einem Antriebsmotor umfassenden Antriebseinrichtung, die unterflurig am Wagenkasten angeordnet ist und in Antriebsverbindung mit wenigstens einem den Wagenkasten tragenden Fahrwerk steht sowie mit geräuschdämmenden Mitteln, wobei
ein die Antriebseinrichtung aufnehmender Maschinenraum (6) von einer geräuschdämmend aufgebauten Kapselung (5) umschlossen ist,
die Antriebseinrichtung wenigstens einen Lüfter (20) aufweist,
in der Außenwandung der Kapselung zumindest eine Ansaugöffnung (16) und eine Ausblasöffnung (22) für vom Lüfter (20) durch den Maschinenraum (6) geforderte Kühlluft vorgesehen ist und
die Ansaugöffnung (16) und die Ausblasöffnung (22) quer zur Wagenkastenlängsachse weisen und
**dadurch gekennzeichnet,**
**daß** der Ansaugöffnung (16) ein geräuschgedämmter Ansaugkanal (18) nachgeordnet und der Ausblasöffnung (22) ein geräuschgedämmter Ausblaskanal (23) vorgeordnet ist, wobei
der Ansaugkanal (18) parallel zu der die Ansaugöffnung (16) aufnehmenden Außenwandung (15) verläuft.

2. Schienentriebfahrzeug nach Anspruch 1, **dadurch gekennzeichnet, daß** die Ansaugöffnung (16) in einer Seitenwand (15) vorgesehen ist.

3. Schienentriebfahrzeug nach Anspruch 1 oder 2, **dadurch gekennzeichnet, daß** die Ausblasöffnung (22) in der Bodenwannne (21) der Kapselung (5) angeordnet ist und nach unten weist.

4. Schienentriebfahrzeug nach einem der Anspruche 1 bis 3, **dadurch gekennzeichnet, daß** die Antriebseinrichtung einen Verbrennungsmotor (7) mit einem damit in Antriebsverbindung stehenden Elektrogenerator (8) aufweist, welcher mit einem Kühllüfter (29) verbunden ist, der saugseitig mit dem Ansaugkanal (16) kommuniziert sowie ausblasseitig frei in den Maschinenraum (6) ausmündet.

5. Schienentriebfahrzeug nach einem der Anspruche 1 bis 4, **dadurch gekennzeichnet, daß** an den Ansaugkanal (18) zusätzlich ein Hauptlüfter (24) angeschlossen ist, der ausblasseitg in den Maschinenraum (6) ausmündet.

6. Schienentriebfahrzeug nach einem der Anspruche 1 bis 5, **dadurch gekennzeichnet, daß** der Ausblaskanal (22) vom Boden (21) ausgehend im oberen Bereich des von der Kapselung (5) umschlossen Maschinenraums (6) endet.

7. Schienentriebfahrzeug nach einem der Anspruche 2 bis 6, **dadurch gekennzeichnet, daß** die Ansaugöffnung (16) in einer Seitenwand (15) der Kapselung (5) angeordnet ist.

8. Schienentriebfahrzeug nach einem der Anspruche 2 bis 7, **dadurch gekennzeichnet, daß** die Ansaugöffnung in einer Seitenwand des Wagenkastens (1) angeordnet ist.

9. Schienentriebfahrzeug nach einem der Anspruche 1 bis 8, **dadurch gekennzeichnet, daß** die Antriebseinrichtung ein Getriebe (8) mit einer Getriebesteuerung (11) aufweist und daß an die Getriebesteuerung (11) ein Nebenluftkanal (28) herangeführt ist, der mit Kühlluft gespeist ist.

10. Schienentriebfahrzeug nach einem der Anspruche 1 bis 9, **dadurch gekennzeichnet, daß** der Nebenluftkanal (28) an den Ansaugstutzen eines separaten Kühllüfter (2) angesetzt ist, dessen Eingangsstutzen an einen weiteren geräuschdämmenden Ansaugkanal (30) angeschlossen ist und daß die Ansaugöffnung (31) dieses Ansaugkanals (30) in einer Seitenwand (15) der Kapselung (5) angeordnet ist.

11. Schienentriebfahrzeug nach einem der Anspruche 1 bis 10, **dadurch gekennzeichnet, daß** im Maschinenraum (6) ein temperaturunabhängiges Schaltelement angeordnet ist, das oberhalb einer Grenzwerttemperatur den Stromkreis des Hauptlüfters (24) aktiviert.

## Claims

1. A driven rail vehicle with a body and a drive device comprising a drive engine, said drive device being arranged in the body beneath the floor and being in drive connection with at least one carriage carrying the body and with soundproofing means, wherein
a machine room (6) accommodating the drive device is surrounded by an encapsulation (5) designed to provide soundproofing,
the drive device comprises at least one fan (20),
provided in the outer wall of the encapsulation is at least one intake suction aperture (16) and an outlet blower aperture (22) for cooling air conveyed by the fan (20) through the machine room (6) and
the intake suction aperture (16) and the outlet blower aperture (22) point transversely to the longitudinal axis of the body and
**characterised in that**
a soundproofing intake suction channel (18) is arranged downstream of the intake suction aperture (16) and a soundproofing outlet blower channel (23) is arranged upstream of the outlet blower aperture (22), wherein the intake suction channel (18) runs parallel to the outer wall (15) accommodating the intake suction aperture (16) .

2. The driven rail vehicle according to Claim 1, **characterised in that** the intake suction aperture (16) is provided in a side wall (15).

3. The driven rail vehicle according to Claim 1 or 2, **characterised in that** the outlet blower aperture (22) is arranged in the base trough (21) of the encapsulation (5) and points downwards.

4. The driven rail vehicle according to any one of Claims 1 to 3, **characterised in that** the drive device comprises a combustion engine (7) with an electricity generator (8) in drive connection therewith, which is connected to a cooling fan (29), which on the suction side communicates with the intake suction channel (16) and on the outlet blower side opens freely into the machine room (6).

5. The driven rail vehicle according to any one of Claims 1 to 4, **characterised in that**, additionally, a main fan (24) is connected to the intake suction channel (18), which on the outlet blower side opens into the machine room (6).

6. The driven rail vehicle according to any one of Claims 1 to 5, **characterised in that** the outlet blower channel (22), going outwards from the floor (21) ends in the upper area of the machine room (6) enclosed by the encapsulation (5).

7. The driven rail vehicle according to any one of Claims 2 to 6, **characterised in that** the intake suction aperture (16) is arranged in a side wall (15) of the encapsulation (5) .

8. The driven rail vehicle according to any one of Claims 2 to 7, **characterised in that** the intake suction aperture is arranged in a side wall of the body (1).

9. The driven rail vehicle according to any one of Claims 1 to 8, **characterised in that** the drive device comprises a transmission (8) with a transmission control unit (11), and **in that** an ancillary air channel (28) is conducted to the transmission control unit (11), which is fed with cooling air.

10. The driven rail vehicle according to any one of Claims 1 to 9, **characterised in that** the ancillary air channel (28) is located at the suction nozzle of a separate cooling fan (2), of which the intake nozzle is connected to a further soundproofing intake suction channel (30), and **in that** the intake suction aperture (31) of this intake suction channel (30) is arranged in a side wall (15) of the encapsulation (5).

11. The driven rail vehicle according to any one of Claims 1 to 10,**characterised in that** a temperature-independent switching element is arranged in the machine room (6), which above a limit value temperature activates the power circuit of the main fan (24).

## Revendications

1. Véhicule ferroviaire automoteur avec une carrosserie et un mécanisme moteur comprenant un moteur de commande disposé sous la carrosserie et relié par moteur au moins à un mécanisme de déplacement supportant la carrosserie ainsi qu'à des dispositifs d'insonorisation, dans lequel
un compartiment machine (6) logeant le mécanisme moteur est entouré d'un blindage d'insonorisation intégré (5), le mécanisme moteur comporte au moins un aérateur (20),
la paroi extérieure du blindage comporte au moins une bouche d'aspiration (16) et une bouche de sortie (22) pour l'air de refroidissement transporté par l'aérateur (20) à travers le compartiment machine (6) et
la bouche d'aspiration (16) et la bouche de sortie (22) sont transversales par rapport à l'axe longitudinal de la carrosserie et
**caractérisé en ce que**,
la bouche d'aspiration (16) est disposée après un canal d'aspiration insonorisé (18) et la bouche de sortie (22) est disposée avant un canal de sortie insonorisé (23),
le canal d'aspiration (18) étant parallèle à la paroi extérieure (15) supportant la bouche d'aspiration (16).

2. Véhicule ferroviaire automoteur selon la revendication 1, **caractérisé en ce que** la bouche d'aspiration (16) est prévue dans une paroi latérale (15).

3. Véhicule ferroviaire automoteur selon les revendications 1 ou 2, **caractérisé en ce que** la bouche de sortie (22) est disposée dans la cuve de fond (21) du blindage (5) et est tournée vers le bas.

4. Véhicule ferroviaire automoteur selon l'une des revendications 1 à 3, **caractérisé en ce que** le mécanisme moteur comporte un moteur de combustion (7) équipé d'un générateur électrique (8) relié par moteur à celui-ci, qui est raccordé à un refroidisseur d'air (29) communiquant côté aspiration avec le canal d'aspiration (16) et débouchant librement dans le compartiment machine (6) côté sortie.

5. Véhicule ferroviaire automoteur selon l'une des revendications 1 à 4, **caractérisé en ce qu'**un aérateur principal (24) est raccordé en plus au canal d'aspiration (18), lequel aérateur débouche côté sortie dans le compartiment machine (6).

6. Véhicule ferroviaire automoteur selon l'une des revendications 1 à 5, **caractérisé en ce que** le canal de sortie (22) se termine, depuis le sol (21) dans la zone supérieure du compartiment machine (6) entouré du blindage (5).

7. Véhicule ferroviaire automoteur selon l'une des revendications 2 à 6, **caractérisé en ce que** la bouche d'aspiration (16) est disposée dans une paroi latérale (15) du blindage (5).

8. Véhicule ferroviaire automoteur selon l'une des revendications 2 à 7, **caractérisé en ce que** la bouche d'aspiration (16) est disposée dans une paroi latérale (1) de la carrosserie (1).

9. Véhicule ferroviaire automoteur selon l'une des revendications 1 à 8, **caractérisé en ce que** le mécanisme moteur comporte une transmission (8) avec une commande de transmission (11) et **en ce qu'**un canal d'air additionnel (28) alimenté en air de refroidissement est amené à la commande de transmission (11).

10. Véhicule ferroviaire automoteur selon l'une des revendications 1 à 9, **caractérisé en ce que** le canal d'air additionnel (28) est fixé aux orifices d'aspiration d'un refroidisseur d'air séparé (2) dont les orifices d'entrée sont raccordés à un autre canal d'aspiration d'insonorisation (30) et **en ce que** la bouche d'aspiration de ce canal d'aspiration (30) est disposée dans une paroi latérale (15) du blindage (5) .

11. Véhicule ferroviaire automoteur selon l'une des revendications 1 à 10, **caractérisé en ce qu'**un élément de commutation indépendant de la température est disposé dans le compartiment machine (6) et active le circuit électrique de l'aérateur principal (24) au-dessus d'une température limite.
